# EUROPEAN PATENT APPLICATION

(11) **EP 4 597 598 A1**
(43) Date of publication of application: **06.08.2025**
(21) Application number: 25153349.3
(22) Date of filing: 22.01.2025
(51) Int. Cl.: H01M 4/04, H01M 4/62, H01M 4/66, H01M 10/05, H01M 4/02

(54) **NEGATIVE ELECTRODE FOR RECHARGEABLE LITHIUM BATTERY AND RECHARGEABLE LITHIUM BATTERY INCLUDING THE SAME**

(30) Priority: 29.01.2024 KR 20240013460
(71) Applicant: SAMSUNG SDI CO., LTD., Yongin-si, Gyeonggi-do 17084 (KR)
(72) Inventor: KIM, Minjun, 17084 Gyeonggi-do (KR); KIM, Beom Kwon, 17084 Gyeonggi-do (KR); KIM, Soochan, 17084 Gyeonggi-do (KR); AN, Hoyong, 17084 Gyeonggi-do (KR); JUNG, Hyeseung, 17084 Gyeonggi-do (KR); HONG, Minyoung, 17084 Gyeonggi-do (KR); JO, Gurnyoung, 17084 Gyeonggi-do (KR)
(74) Representative: Michalski Hüttermann & Partner Patentanwälte mbB

(57) **Abstract**

Examples of this disclosure include a negative electrode for a rechargeable lithium battery, and a rechargeable lithium battery including the same. The negative electrode for the rechargeable lithium battery includes a current collector, a negative active material layer, and a binder layer between the current collector and the negative active material layer, wherein the negative active material layer has a surface roughness of about 2 µm to about 8 µm.

## Description

### BACKGROUND

### (a) Field

Example embodiments relate to a negative electrode for a rechargeable lithium battery, and a rechargeable lithium battery including the negative electrode.

### (b) Description of the Related Art

Recently, the rapid growth of electronic devices such as, e.g., mobile phones, laptop computers, and electric vehicles using batteries may typically require substantial increases in demand for high-energy density and high-capacity rechargeable lithium batteries. Research and development for improving performance of rechargeable lithium battery are actively pursued.

A rechargeable lithium battery typically includes a positive electrode and a negative electrode including an active material capable of intercalating and deintercalating lithium ions, and an electrolyte solution. Electrical energy is produced by oxidation and reduction reactions when lithium ions are intercalated/deintercalated at the positive and negative electrodes.

### SUMMARY

One or more example embodiments provide a negative electrode for a rechargeable lithium battery exhibiting desired, improved or advantageous adhesion and improved fast charge characteristic.

Another example embodiment provides a rechargeable lithium battery including the negative electrode.

One or more example embodiments include a negative electrode for a rechargeable lithium battery including a current collector, a negative active material layer, and a binder layer between the current collector and the negative active material layer, wherein the negative active material layer has a surface roughness of about 2 µm to about 8 µm.

Another example embodiment includes a method of preparing a negative electrode for a rechargeable lithium battery which includes preparing a negative active material layer by coating a negative active material layer composition on a release substrate, preparing a binder layer by coating a binder liquid on the negative active material layer negative active material layer, and positioning a current collector on the binder layer and applying a pressure on the current collector, and removing the release substrate.

Still another example embodiment includes a rechargeable lithium battery including the negative electrode, a positive electrode, and a non-aqueous electrolyte.

A rechargeable lithium battery according to one or more example embodiments may exhibit desired, improved or advantageous high-rate charge and discharge characteristics.

### BRIEF DESCRIPTION OF THE DRAWINGS

FIG. 1 schematically shows a cross-sectional view for the negative electrode for a rechargeable lithium battery, according to some example embodiments.
FIG. 2 is a drawing showing a method of preparing the negative electrode for a rechargeable lithium battery, according to example embodiments .
FIG. 3 to FIG. 6 schematically show the cross-sectional views for the rechargeable lithium battery, according to example embodiments.

### DETAILED DESCRIPTION

Hereinafter, example embodiments are described in detail. However, these embodiments are examples, the present invention is not limited thereto and the present invention is defined by the scope of claims.

As used herein, when a definition is not otherwise provided, it will be understood that when an element such as a layer, film, region, or substrate is referred to as being "on" another element, it may be directly on the other element or intervening elements may also be present.

Unless otherwise specified in the specification, expressions in the singular include expressions in plural. Unless otherwise specified, "A or B" may indicate "includes A, includes B, or includes A and B."

As used herein, the term "combination thereof may include a mixture, a laminate, a complex, a copolymer, an alloy, a blend, a reactant of constituents.

When the terms "about" or "substantially" are used in this specification in connection with a numerical value, it is intended that the associated numerical value include a tolerance of ±10% around the stated numerical value. When ranges are specified, the range includes all values therebetween such as increments of 0.1%.

As used herein, when a definition is not otherwise provided, a particle diameter may be an average particle diameter. Such a particle diameter indicates an average particle diameter (D50) where a cumulative volume is about 50 volume% in a particle size distribution. The particle size (D50) may be measured by a method well known to those skilled in the art, for example, by a particle size analyzer, or by a transmission electron microscopic image, or a scanning electron microscopic image. In some example embodiments, a dynamic light-scattering measurement device is used to perform a data analysis, and the number of particles is counted for each particle size range, and from this, the average particle diameter (D50) value may be easily obtained through a calculation. The particle size may be measured by a laser diffraction method. The laser diffraction may be obtained by distributing particles to be measured in a distribution solvent and introducing the distribution solvent and the particles to a commercially available laser diffraction particle measuring device (e.g., MT 3000 available from Microtrac, Inc.), irradiating ultrasonic waves of about 28 kHz at a power of about 60 W, and calculating an average particle diameter (D50) in the 50 % standard of particle distribution in the measuring device.

In some example embodiments, an average particle diameter may be measured by various techniques, and for example, may be measured by a particle analyzer.

As used herein, soft carbon refers to graphitizable carbon materials that are readily graphitized by heat treatment at a high temperature, e.g., about 2800 °C. Hard carbon refers to non-graphitizable carbon materials that are less graphitized by heat treatment. The soft carbon and the hard carbon are well known in the related arts.

A negative electrode for a rechargeable lithium battery according to one or more example embodiments includes a current collector, a negative active material layer, and a binder layer between the current collector and the negative active material layer. A surface roughness of the negative active material layer is about 2 µm to about 8 µm, and may be about 2.5 µm to about 7 µm, or about 3 µm to about 6 µm.

The surface roughness may be an Ra value, which is an arithmetic average value representing the average of the absolute values of the heights on both sides of the uneven center line. The surface roughness may be measured by preparing a negative electrode with a size of 3 µm X 3 µm as a sample and measuring for the sample using a AFM (atomic force microscope). For example, it may be the average roughness Ra calculated by measuring the surface roughness of five or more points on the sample surface.

The surface roughness of the negative active material layer within the range indicates that the surface of the negative active material layer is not smooth and has protrusions and depressions, and the surface may be porous. The negative active material layer with the surface roughness has ion passages, which facilitates the intercalating and deintercalating of lithium ions, thereby improving fast charge.

When the surface roughness of the negative active material layer is smaller than the above ranges, the surface of the negative active material layer is smooth, which may result in no improvements in the fast charge. When the surface roughness is larger than the above ranges, the surface of the negative active material layer may be too rough, which may cause an increase in active material loss, thereby reducing a loading amount.

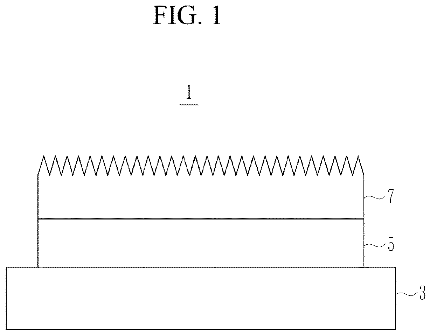

A structure of the negative electrode for a rechargeable lithium battery according to one or more example embodiments is schematically shown in FIG. 1, and the negative electrode 1 includes a current collector 3, a binder layer 5, and a negative active material layer 7, and the negative active material layer 7 has protrusions and depressions on the surface thereof. FIG. 1 shows that the sizes of the protrusions and depressions formed in the negative active material layer 7 are exaggerated for clarity, and the excessive protrusions and depressions may not be formed as shown in FIG. 1.

In one or more example embodiments, the binder layer may consist of or include a binder. For example, the binder layer may only include the binder and may consist of only the binder, expect for impurities that may remain from the negative electrode preparation process. The binder layer which only includes the binder may substantially improve the adhesion, compared to a binder layer including other components together with the binder.

The binder may be or include a non-aqueous binder, an aqueous binder, or a combination thereof.

The non-aqueous binder may be or include polyvinylchloride, carboxylated polyvinylchloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may be or include at least one of a styrene-butadiene rubber, a (meth)acrylated styrene-butadiene rubber, a (meth)acrylonitrile-butadiene rubber, (meth)acrylic rubber, a butyl rubber, a fluoro rubber, polyethylene oxide, polyvinylpyrrolidone, polyepichlorohydrine, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resins, polyvinyl alcohol, and a combination thereof.

The aqueous binder may be or include a cellulose compound, or may be or include the cellulose compound together with the aqueous binder. The cellulose compound includes one or more of carboxymethyl cellulose, hydroxypropylmethyl cellulose, methyl cellulose, or alkali metal salts thereof. The alkali metal may be or include at least one of Na, K, or Li.

Inclusion of the binder layer between the current collector and the negative active material layer in the negative electrode according to one or more example embodiments may provide desired, improved or advantageous adhesion between the current collector and the negative active material layer. Even when the negative active material layer expands during charging and discharging, the negative active material may still maintain desired, improved or advantageous adhesion to the current collector, thereby exhibiting enhanced cycle-life characteristics.

In one or more example embodiments, a thickness of the binder layer may be about 0.2 µm to about 1.7 µm, about 0.3 µm to about 1.5 µm, or about 0.5 µm to about 1.0 µm. When the thickness of the binder layer satisfies in the range, the desired, improved or advantageous adhesion between the current collector and the negative active material layer may be well maintained, without relative capacity fading.

In one or more example embodiments, the thickness of the negative active material layer may be about 60 µm to about 150 µm, about 65 µm to about 130 µm, or about 68 µm to about 120 µm. When the thickness of the negative active material layer is within the range, the desired, improved or advantageous adhesion between the current collector and the negative active material layer may be maintained and the desired, improved or advantageous capacity may be realized.

A ratio of the thickness of the negative active material layer to the thickness of the binder layer may be about 750:1 to about 35:1, about 750:1 to about 35.3:1, about 433:1 to about 43:1 or about 240:1 to about 68:1. If the thicknesses of the binder layer and the negative active material layer are within any of the above ranges and the thickness ratio of the binder layer and the negative active material layer satisfies any of the above ranges, the desired, improved or advantageous adherence of the negative active material layer to the current collector due to the binder layer may be well maintained and high-capacity may be exhibited.

In one or more example embodiments, the negative active material layer includes a negative active material and a binder. An amount of the binder may be, based on the total 100 wt% of the negative active material layer, about 0.1 wt% to about 0.5 wt%, or about 0.1 wt% to about 0.3 wt%. In the negative electrode according to one or more example embodiments, the amount of the binder included in the negative active material layer may be a minimum amount at which cohesion of the active material may be maintained, and thus, the amount of the negative active material may be relatively increased in the negative active material layer, thereby exhibiting higher capacity.

The negative active material includes at least one of a material that reversibly intercalates/deintercalates lithium ions, a lithium metal, a lithium metal alloy, a material capable of doping/dedoping lithium, or a transition metal oxide.

The material that reversibly intercalates/deintercalates lithium ions may be or include a carbon material, and for example, crystalline carbon, amorphous carbon, or a combination thereof. The crystalline carbon may be unspecified shaped, sheet, flake, spherical, or fiber shaped natural graphite or artificial graphite, and the amorphous carbon may be or include a soft carbon, a hard carbon, a mesophase pitch carbonization product, fired coke, and the like.

The lithium metal alloy includes an alloy of lithium and a metal that includes at least one of Na, K, Rb, Cs, Fr, Be, Mg, Ca, Sr, Si, Sb, Pb, In, Zn, Ba, Ra, Ge, Al, and Sn.

The material capable of doping/dedoping lithium may be or include a silicon-included material, or a Sn-included negative active material. The Si-included negative active material may be or include silicon, a Si-C composite, SiOₓ (0 < x < 2), a Si-Q alloy (wherein Q is an element that includes an alkali metal, an alkaline-earth metal, a Group 13 element, a Group 14 element (except for Si), a Group 15 element, a Group 16 element, a transition metal, a rare earth element, and a combination thereof. The Sn-included negative active material may be or include Sn, SnO₂, a Sn-included alloy, or a combination thereof.

The Si-included negative active material has larger volume expansion during charge and discharge, than the carbonaceous negative active material so that the effects from desired, improved or advantageous adhesion by positioning the binder layer between the current collector and the negative active material layer may be more substantially realized.

The Si-included negative active material may be or include a silicon-carbon composite.

The carbon may include at least one of amorphous carbon, or amorphous carbon and crystalline carbon.

The silicon-carbon composite may include at least one of silicon particles and an amorphous carbon coated on the surface of the silicon particles. For example, the silicon-carbon composite may include at least one of silicon particles and an amorphous carbon coating layer on the surface of the silicon particles. In some example embodiments, the silicon-carbon composite may include secondary particles (core) where silicon primary particles are agglomerated, and an amorphous carbon coating layer (shell) on the surface of the secondary particles. The amorphous carbon may be located between the silicon primary particles, for example, to coat on the silicon primary particles. For example, the secondary particle may be distributed in an amorphous carbon matrix. The silicon primary particles may be or include nano silicon particles. The nano silicon particle may have a particle diameter of about 10 nm to about 900 nm, about 10 nm to about 800 nm, about 10 nm to about 500 nm, about 10 nm to about 300 nm, or about 10 nm to about 200 nm. If the average particle diameter of the nano silicon particles is within any of the above ranges, the extreme volume expansion caused during charge and discharge may be reduced or suppressed, and a breakage of the conductive path due to crushing of particle may be reduced or prevented. In some example embodiments, the particle diameter of the silicon secondary particle is not particularly limited.

The amorphous carbon may include a soft carbon, a hard carbon, a mesophase pitch carbonization product, calcined coke, carbon fibers, or a combination thereof.

The thickness of the amorphous carbon coating layer may be appropriately adjusted, and may be for example, about 2 nm to about 800 nm, about 5 nm to about 600 nm, about 10 nm to about 400 nm, or about 20 nm to about 200 nm. In one or more example embodiments, the thickness of the amorphous carbon coating layer may be measured by a SEM image or a TEM image for the cross-section of the silicon-carbon composite, but the thickness of the amorphous carbon coating layer may be measured by any techniques.

A particle diameter of the silicon-carbon composite may be appropriately adjusted, and for example, may be about 30 µm or less, and about 1 µm to about 30 µm, about 2 µm to about 25 µm, about 3 µm to about 20 µm, or about 5 µm to about 15 µm.

Based on 100 wt% of the silicon-carbon composite, an amount of the silicon particles may be about 30 wt% to about 70 wt%, or about 40 wt% to about 65 wt%. An amount of the amorphous carbon may be, based on the total 100 wt% of the silicon-carbon composite, about 30 wt% to about 70 wt%, or about 35 wt% to about 60 wt%. If the amounts of the silicon particles and the amorphous carbon satisfy any of the above ranges, higher capacity may be realized.

In the silicon-carbon composite, the carbon may include amorphous carbon and crystalline carbon. In one or more example embodiments, the silicon-carbon composite may include a core including silicon particles and crystalline carbon, and an amorphous carbon coating layer on the surface of the core. For example, the silicon-carbon composite may include a core including secondary particles, where silicon primary particles and crystalline carbon are agglomerated, and an amorphous carbon coating layer on the core. The amorphous carbon is positioned between the silicon primary particles or between the crystalline carbons, thereby filling spaces between the silicon primary particles or the crystalline carbon.

The crystalline carbon may be of unspecified shape, sheet shaped, flake shaped, spherical shaped, fiber shaped, natural graphite or artificial graphite, artificial graphite, or a combination thereof.

An amount of the crystalline carbon may be, based on a total 100 wt% of the silicon particles, the amorphous carbon, and the crystalline carbon, about 1 wt% to about 20 wt%, and for example, about 3 wt% to about 17 wt%, or about 5 wt% to about 15 wt%. When the crystalline carbon is included in an amount within any of the above ranges, the conductivity may be improved.

In the negative active material layer, an amount of the negative active material may be, based on a total 100 wt% of the negative active material layer, about 99.5 wt% to about 99.9 wt%, or about 99.7 wt% to about 99.9 wt%.

In one or more example embodiments, the negative active material layer may further include a conductive material. In case of further including the conductive material, based on a total 100 wt% of the negative active material, an amount of the binder may be about 0.1 wt% to about 0.5 wt%, an amount of the negative active material may be about 94.5 wt% to about 99.4 wt%, and an amount of the conductive material may be about 0.5 wt% to about 5 wt%.

The binder included in the negative active material layer may include a non-aqueous binder, an aqueous binder, or a combination thereof. The non-aqueous binder or the aqueous binder may be as described above. The binder included in the binder layer may be identical to or different from the binder included in the negative active material layer.

The binder included in the negative active material layer may include a cellulose compound, and the cellulose compound may serve as a binder and serve as a thickener for imparting viscosity. The cellulose-based compound may be used at a suitable amount in the amount of the binder.

The cellulose-based compound includes one or more of carboxymethyl cellulose, hydroxypropyl methyl cellulose, methyl cellulose, or alkali metal salts thereof. The alkali metal may be or include at least one of Na, K, or Li.

The dry binder may be or include a polymer material that is capable of being fibrous. For example, the dry binder may be or include polytetrafluoroethylene, polyvinylidene fluoride, a polyvinylidene fluoride-hexafluoropropylene copolymer, polyethylene oxide, or a combination thereof.

The conductive material is included to provide electrode conductivity. Any electrically conductive material may be used as a conductive material unless the electrically conductive material causes a chemical change. Examples of the conductive material include a carbon-based material such as at least one of natural graphite, artificial graphite, carbon black, acetylene black, ketjen black, a carbon fiber, a carbon nanofiber, carbon nanotubes, or the like; a metal-based material of a metal powder or a metal fiber including at least one of copper, nickel, aluminum, silver, or the like; a conductive polymer such as a polyphenylene derivative; or a mixture thereof.

The current collector may include a copper foil, a nickel foil, a stainless steel foil, a titanium foil, a nickel foam, a copper foam, a polymer substrate coated with a conductive metal, or a combination thereof.

A method of preparing a negative electrode for a rechargeable lithium battery

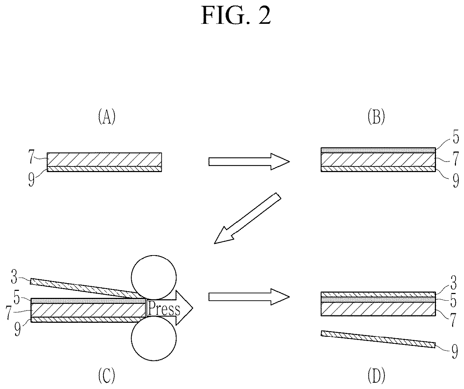

The negative electrode according to one or more example embodiments may be prepared by coating a negative active material layer composition on a release substrate to prepare a negative active material layer, coating a binder liquid on the negative active material layer to prepare a binder layer, positioning a current collector on the binder layer, applying a pressure on the binder layer, and removing the release substrate. Hereinafter, the method of preparing the negative electrode is illustrated in more detail with reference to FIG. 2.

In FIG. 2, the negative active material layer composition is coated on a release substrate 9 to prepare a negative active material layer 7 ("(A)" in FIG. 2). The release substrate may be or include any material which may be readily removed without adversely affecting the negative active material layer in the subsequent process, and for example, the release substrate may be or include at least one of a polymer substrate and a metal substrate. The polymer may be or include polyethylene terephthalate, polypropylene, polyimide, or a combination thereof, and the metal may be copper, aluminum, or a combination thereof.

The negative active material layer composition may include at least one of a negative active material, a binder, and a solvent, and may optionally further include a conductive material. In the negative active material layer composition, an amount of the binder may be, based on a total 100 wt% of the solid amount, about 0.1 wt% to about 0.5 wt%, or about 0.1 wt% to about 0.3 wt%. When the negative active material layer composition includes the binder and the negative active material, an amount of the negative active material may be about 99.5 wt% to about 99.9 wt%, or about 99.7 wt% to about 99.9 wt%. When the negative active material layer composition includes the binder, the negative active material, and the conductive material, an amount of the binder may be about 0.1 wt% to about 0.5 wt%, an amount of the negative active material may be about 94.5 wt% to about 99.4 wt%, and an amount of the conductive material may be about 0.5 wt% to about 5 wt%.

The solvent may be or include water or an organic solvent such as N-methyl pyrrolidone, and may be appropriately selected according to the type of the binder.

After the composition is coated, a drying is carried out.

Thereafter, a binder liquid is coated on the negative active material layer 7 to prepare a binder layer 5 ("B" in FIG. 2). After coating, a drying is carried out.

The binder liquid consists of or include a binder and a solvent, and the solvent may be or include water, N-methyl pyrrolidone, or a combination thereof. In the binder liquid, an amount of the binder may be about 30 wt% to about 50 wt% or about 35 wt% to about 45 wt%.

Using the binder liquid consisting of the binder and the solvent may cause to prepare a binder layer 5 that only consists of the binder after removing the solvent during the drying process.

Thereafter, a current collector 3 is positioned on the binder layer 5, and for example, is positioned to contact the binder layer 5, and then a pressure is applied ("C" in FIG. 2) on the current collector 3. Based on the applied pressure, the binder layer 5 adheres to the negative active material layer 7 is transferred to the current collector.

Applying the pressure may be performed by applying a pressure of about 0.1 MPa to about 1.5 MPa, or a pressure of about 0.2 MPa to about 1.2 MPa, or a pressure of about 0.3 MPa to about 0.9 MPa, on the current collector 3 over the binder layer 5. If the pressure within any of the above ranges is applied, the binder layer 5 adhered with the negative active material layer 7 may be more effectively transferred to the current collector.

In the product obtained from the applied pressure, a thickness of the binder layer may be about 0.2 µm to about 1.7 µm, about 0.3 µm to about 1.5 µ m, or about 0.5 µm to about 1.0 µm, a thickness of the negative active material layer may be about 60 µm to about 150 µm, about 65 µm to about 130 µm, or about 68 µm to about 120 µm. A ratio of the thickness of the binder layer to the thickness of the negative active material layer may be about 750:1 to about 35:1, about 750:1 to about 35.3:1, about 433:1 to about 43:1, or about 240:1 to about 68:1.

Thereafter, the release substrate 9 is removed from the negative active material layer ("D" in FIG. 2). During the removing the release substrate 9, the release substrate 9 is separated from the negative active material layer 7 to increase roughness on the surface of the negative active material layer 7, for example, to form protrusion and depressions. Resultantly, the negative active material layer 7 may have a surface roughness of about 2 µm to about 8 µm, about 2.5 µm to about 7 µm, or about 3 µm to about 6 µm.

### Rechargeable lithium battery

Another example embodiment provides a rechargeable lithium battery including the negative electrode, a positive electrode, and an electrolyte.

### Positive electrode

The positive electrode may include a current collector and a positive electrode active material layer on the current collector. The positive electrode active material layer includes a positive electrode active material and may further include a binder and/or a conductive material.

For example, the positive electrode may further include an additive that may serve as a sacrificial positive electrode.

An amount of the positive active material may be, about 90 wt% to about 99.5 wt% based on 100 wt% of the positive active material layer, and amounts of the binder and the conductive material may be respectively 0.5 wt% to 5 wt% based on 100 wt% of the positive active material layer.

The positive active material may include a compound (lithiated intercalation compound) that is capable of intercalating and deintercalating lithium. In some example embodiments, at least one of a composite oxide of lithium and a metal that includes at least one of cobalt, manganese, nickel, or combinations thereof may be used.

The composite oxide may be or include a lithium transition metal composite oxide, and examples thereof may include lithium nickel-based oxide, lithium cobalt-based oxide, lithium manganese-based oxide, lithium iron phosphate-based compound, cobalt-free nickel-manganese-based oxide, or a combination thereof.

For example, the following compounds represented by any one or more of the following chemical formulas may be used. LiₐA_{1-b}X_{b}O_{2-c}D_{c} (0.90≤a≤1.8, 0≤b≤0.5, 0≤c≤0.05); LiₐMn_{2-b}X_{b}O_{4-c}D_{c} (0.90≤a≤1.8, 0≤b≤0.5, 0≤c≤0.05); LiₐNi_{1-b-c}Co_{b}X_{c}O_{2-α}D_{α} (0.90≤a≤1.8, 0≤b≤0.5, 0≤c≤0.5, 0<α<2); LiₐNi_{1-b-c}Mn_{b}X_{c}O_{2-α}O_{α} (0.90≤a≤1.8, 0≤b≤0.5, 0≤c≤0.5, 0<a<2); LiₐNi_{b}Co_{c}L¹_{d}GₑO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMn_{1-b}G_{b}O₂ (0.90≤a≤1.8, 0.001≤b≤0.1); LiₐMn₂G_{b}O₄ (0.90≤a≤1.8, 0.001≤b≤0.1); LiₐMn_{1-g}G_{g}PO₄ (0.90≤a≤1.8, 0≤g≤0.5); Li_{(3-f)}Fe₂(PO₄)₃ (0≤f≤2); LiₐFePO₄ (0.90≤a≤1.8).

In the above chemical formulas, A is or includes Ni, Co, Mn, or a combination thereof; X is or includes Al, Ni, Co, Mn, Cr, Fe, Mg, Sr, V, a rare earth element or a combination thereof; D is or includes O, F, S, P, or a combination thereof; G is Al, Cr, Mn, Fe, Mg, La, Ce, Sr, V, or a combination thereof; and L₁ is or includes Mn, Al, or a combination thereof.

For example, the positive electrode active material may be a high nickel-based positive electrode active material having a nickel amount of greater than or equal to about 80 mol%, greater than or equal to about 85 mol%, greater than or equal to about 90 mol%, greater than or equal to about 91 mol%, or greater than or equal to about 94 mol% and less than or equal to about 99 mol% based on 100 mol% of the metal excluding lithium in the lithium transition metal composite oxide. The high-nickel-based positive electrode active material may realize high capacity and may be applied to a high-capacity, high-density rechargeable lithium battery.

The binder improves binding properties of positive electrode active material particles with one another and with a current collector. Examples of the binder may be or include at least one of polyvinyl alcohol, carboxymethyl cellulose, hydroxypropyl cellulose, diacetyl cellulose, polyvinylchloride, carboxylated polyvinylchloride, polyvinyl fluoride, an ethylene oxide-containing polymer, polyvinyl pyrrolidone, polyurethane, polytetrafluoroethylene, polyvinylidene fluoride, polyethylene, polypropylene, a styrene butadiene rubber, a (meth)acrylated styrene butadiene rubber, an epoxy resin, a (meth)acrylic resin, a polyester resin, nylon, or the like, but are not limited thereto.

The conductive material is included to provide electrode conductivity, and any electrically conductive material may be used as a conductive material unless the conductive material causes a chemical change. Examples of the conductive material may include a carbon-based material such as natural graphite, artificial graphite, carbon black, acetylene black, Ketjen black, carbon fiber, carbon nanofiber, carbon nanotube, or the like; a metal-based material of a metal powder or a metal fiber including at least one of copper, nickel, aluminum, silver, or the like; a conductive polymer such as a polyphenylene derivative; or a mixture thereof.

The current collector may include Al, but is not limited thereto.

### Electrolyte

The electrolyte includes at least one of a non-aqueous organic solvent and a lithium salt.

The non-aqueous organic solvent serves as a medium for transmitting ions taking part in the electrochemical reaction of a battery.

The non-aqueous organic solvent may include at least one of a carbonate-based, ester-based, ether-based, ketone-based, alcohol-based, or aprotic solvent.

The carbonate-based solvent may include at least one of dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), or the like.

The ester-based solvent may include at least one of methyl acetate, ethyl acetate, n-propyl acetate, dimethyl acetate, methyl propionate, ethyl propionate, decanolide, mevalonolactone, valerolactone, caprolactone, or the like.

The ether-based solvent may include at least one of dibutyl ether, tetraglyme, diglyme, dimethoxyethane, 2-methyltetrahydrofuran, 2,5-dimethyltetrahydrofuran, tetrahydrofuran, or the like. The ketone-based solvent may include cyclohexanone, or the like. The alcohol-based solvent may include at least one of ethanol, isopropyl alcohol, and the like and the aprotic solvent may include at least one of nitriles such as R-CN (wherein R is a C2 to C20 linear, branched, or cyclic hydrocarbon group, and may include a double bond, an aromatic ring, or an ether bond, and the like); amides such as dimethylformamide; dioxolanes such as 1,3-dioxolane, 1,4-dioxolane, and the like; sulfolanes, or the like.

The organic solvent may be used alone or in a mixture of two or more.

If the carbonate-based solvent is used, the cyclic carbonate and the linear carbonate may be used together therewith, and the cyclic carbonate and the linear carbonate may be mixed at a volume ratio of about 1:1 to about 1:9.

The lithium salt dissolved in an organic solvent supplies a battery with lithium ions, and improves transportation of the lithium ions between positive and negative electrodes. Examples of the lithium salt include one or at least two supporting electrolyte salt that includes at least one of LiPF₆, LiBF₄, LiSbF₆, LiAsF₆, LiClO₄, LiAlO₂, LiAlCl₄, LiPO₂F₂, LiCl, Lil, LiN (SO₃C₂F₅)₂, Li(FSO₂)₂N (lithium bis(fluorosulfonyl)imide, LiFSI), LiC₄F₉SO₃, LiN(CₓF₂ₓ₊₁SO₂)(C_{y}F_{2y+1}SO₂), where x and y are an integer of 1 to 20, lithium trifluoromethane sulfonate, lithium tetrafluoroethane sulfonate, lithium difluorobis(oxalato)phosphate (LiDFOB), lithium bis(oxalato) borate (LiBOB).

### Separator

A separator may be located between the positive electrode and the negative electrode depending on a type of a rechargeable lithium battery. The separator may use or include at least one of polyethylene, polypropylene, polyvinylidene fluoride or multi-layers thereof having two or more layers, and may be a mixed multilayer such as a polyethylene/polypropylene double-layered separator, a polyethylene/polypropylene/polyethylene triple-layered separator, a polypropylene/polyethylene/polypropylene triple-layered separator, and the like.

The separator may include a porous substrate and a coating layer including an organic material, an inorganic material, or a combination thereof on one or both surfaces of the porous substrate.

The porous substrate may be or include a polymer film formed of or including any one or more of polyolefin such as polyethylene and polypropylene, polyester such as polyethylene terephthalate and polybutylene terephthalate, polyacetal, polyamide, polyimide, polycarbonate, polyether ketone, polyarylether ketone, polyetherimide, polyamideimide, polybenzimidazole, polyethersulfone, polyphenylene oxide, a cyclic olefin copolymer, polyphenylene sulfide, polyethylene naphthalate, a glass fiber, TEFLON, and polytetrafluoroethylene, or a copolymer or mixture of two or more thereof.

The organic material may include a polyvinylidene fluoride-based polymer or a (meth)acryl-based polymer.

The inorganic material may be or include an inorganic particle that includes at least one of Al₂O₃, SiO₂, TiO₂, SnO₂, CeO₂, MgO, NiO, CaO, GaO, ZnO, ZrO₂, Y₂O₃, SrTiOs, BaTiOs, Mg(OH)₂, boehmite, or a combination thereof, but is not limited thereto.

The organic material and an inorganic material may be mixed in one coating layer, or a coating layer including an inorganic material may be stacked.

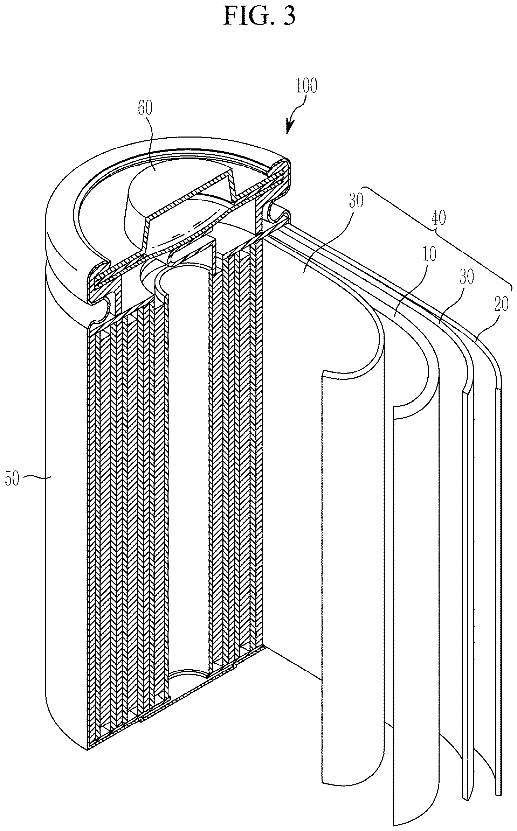

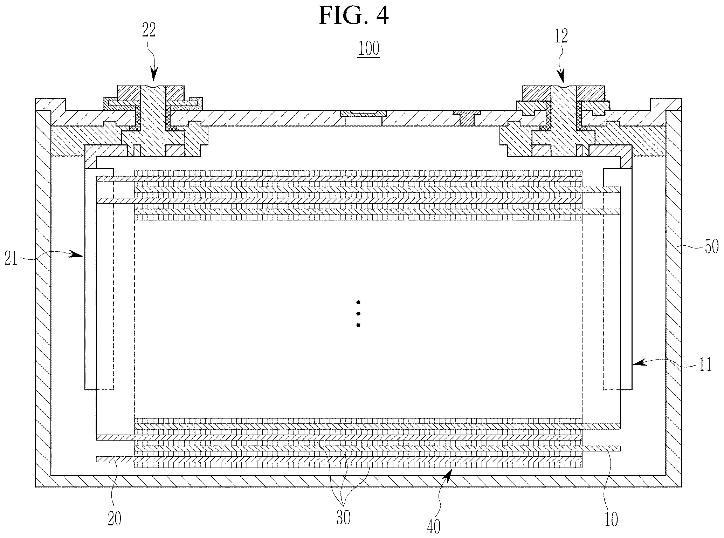

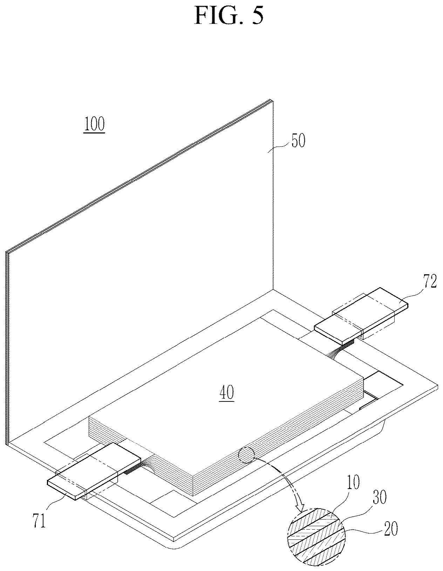

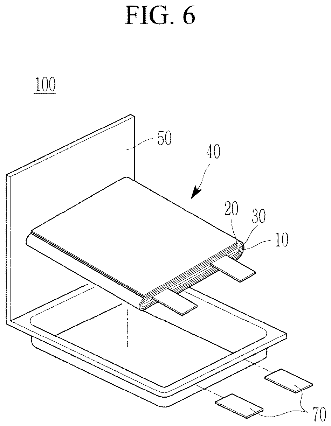

The rechargeable lithium battery may be a cylindrical, prismatic, pouch, or coin-type battery, and the like, depending on the shape thereof. FIG. 3 to FIG. 6 are schematic views illustrating a rechargeable lithium battery according to an example embodiment. FIG. 3 shows a cylindrical battery, FIG. 4 shows a prismatic battery, and FIG. 5 and FIG. 6 show pouch-type batteries. With respect to FIG. 3 to FIG. 6, the rechargeable lithium battery 100 may include an electrode assembly 40 including a separator 30 between a positive electrode 10 and a negative electrode 20, and a case 50 in which the electrode assembly 40 is included. The positive electrode 10, the negative electrode 20, and the separator 30 may be impregnated with an electrolyte (not shown). The rechargeable lithium battery 100 may include a sealing member 60 sealing the case 50, as shown in FIG. 3. In FIG. 4, the rechargeable lithium battery 100 may include a positive electrode lead tab 11 and a positive terminal 12, a negative electrode lead tab 21, and a negative terminal 22. As shown in FIG. 6, the rechargeable lithium battery 100 may include an electrode tab 70, which may be serving as an electrical path for inducing the current formed in the electrode assembly 40 to the outside, for example, a positive electrode tab 71 and a negative electrode tab 72, as shown in FIG. 5.

The rechargeable lithium battery according to an example embodiment may be applied to ,e .g., automobiles, mobile phones, and/or various types of electric devices, as non-limiting examples.

The following Examples and Comparative Examples are provided in order to highlight characteristics of one or more example embodiments, but it will be understood that the Examples and Comparative Examples are not to be construed as limiting the scope of the example embodiments, nor are the Comparative Examples to be construed as being outside the scope of the example embodiments. Further, it will be understood that the example embodiments are not limited to the particular details described in the Examples and Comparative Example.

### Example 1

97.8 wt% of the silicon-carbon composite, 0.2 wt% of the styrene-butadiene rubber, and 2 wt% of carboxymethyl cellulose were mixed in a water solvent to prepare a negative active material layer composition. As the silicon-carbon composite, a composite including a core including secondary particles where nano silicon primary particles (average particle diameter: 100 nm) were agglomerated and a soft carbon coating layer on the surface of the core, was used. In the silicon-carbon composite, an amount of the nano silicon primary particles was 70 wt%, an amount of soft carbon was 30 wt%, and a thickness of the soft carbon coating layer was 100 nm.

The styrene-butadiene rubber was added to a water solvent to prepare a binder liquid having the solid amount of 90 wt%.

The negative active material layer composition was coated on a copper release substrate and dried to prepare a negative active material layer.

The binder liquid was coated on the negative active material layer and dried to prepare a binder layer.

Thereafter, a copper current collector was positioned on the binder layer (in order to contact with the binder layer) and a pressure of 0.3 MPa was applied on the copper current collector.

The copper release substrate was removed from the negative active material layer to prepare a negative electrode in which the surface roughness of the negative active material layer was 3.2 µm and the binder layer was formed between the negative active material layer and the current collector. In the prepared negative electrode, the thickness of the binder layer was 1 µm and the thickness of the negative active material layer was 70 µm.

96 wt% of a LiNi_{0.8}Co_{0.1}Mn_{0.1}O₂ positive active material, 2 wt% of Ketjen black, and 2 wt% of polyvinylidene fluoride were mixed in an N-methyl pyrrolidone solvent to prepare a positive active material layer slurry. The positive active material layer slurry was coated on an Al foil current collector, dried, and a pressure was applied on the Al foil current collector to prepare a positive electrode.

The negative electrode, the positive electrode, and an electrolyte were used to fabricate a full cell. The electrolyte was used by dissolving 1.5 M LiPF₆ in ethylene carbonate, ethylmethyl carbonate, and dimethyl carbonate (20:10:70 by volume ratio).

### Example 2

A negative electrode and a full cell were fabricated by the same procedure as in Example 1, with a difference that the applied pressure condition was changed into 0.7 MPa to prepare a negative electrode having the negative active material layer with a surface roughness of 4.3 µm. In the prepared negative electrode, a thickness of the binder layer was 1 µm and the thickness of the negative active material layer was 68 µm.

### Example 3

A negative electrode and a full cell were fabricated by the same procedure as in Example 1, with a difference that the applied pressure condition was changed into 0.5 MPa to prepare a negative electrode having the negative active material layer with a surface roughness of 3.7 µm. In the prepared negative electrode, the thickness of the binder layer was 1 µm and the thickness of the negative active material layer was 69 µm.

### Comparative Example 1

A negative electrode and a full cell were fabricated by the same procedure as in Example 1, with a difference that the applied pressure condition was changed into 0.3 MPa to prepare a negative electrode having the negative active material layer with a surface roughness of 0.7 µm. In the prepared negative electrode, the thickness of the binder layer was 1 µm and the thickness of the negative active material layer was 69 µm.

### Comparative Example 2

96 wt% of the silicon-carbon composite, 2 wt% of the styrene-butadiene rubber, and 2 wt% of carboxymethyl cellulose were mixed in an water solvent to prepare a first negative active material layer composition. As the silicon-carbon composite, a composite including a core including secondary particles where nano silicon primary particles (average particle diameter: 100 nm) were agglomerated and a soft carbon coating layer on the surface of the core, was used. In the silicon-carbon composite, an amount of the nano silicon primary particles was 70 wt%, an amount of soft carbon was 30 wt%, and a thickness of the soft carbon coating layer was 100 nm.

97.8 wt% of the silicon-carbon composite, 0.2 wt% of the styrene-butadiene rubber, and 2 wt% of carboxymethyl cellulose were mixed in a water solvent to prepare a second negative active material layer composition. As the silicon-carbon composite, a composite including a core including secondary particles where nano silicon primary particles (average particle diameter: 100 nm) are agglomerated and a soft carbon coating layer on the surface of the core, was use. In the silicon-carbon composite, an amount of the nano silicon primary particles was 70 wt%, an amount of soft carbon was 30 wt%, and a thickness of the soft carbon coating layer was 100 nm.

The second negative active material layer composition was coated on a copper release substrate and dried to prepare a second negative active material layer.

The first negative active material layer was coated on the second negative active material layer and dried to prepare a first negative active material layer.

Thereafter, a copper current collector was positioned on the first negative active material layer (in order to contact with the first negative active material layer) and a pressure of 0.3 MPa was applied on the copper current collector.

The copper release substrate was removed from the second negative active material layer to prepare a negative electrode including the second negative active material layer with a surface roughness of 3.6 µm and the first negative active material layer formed between the second negative active material layer and the current collector. In the prepared negative electrode, the thickness of the first negative active material layer was 35 µm and the thickness of the second negative active material layer was 34 µm.

A full cell was fabricated by the same procedure as in Example 1, with a difference regarding using the negative electrode.

### Experimental Example 1) Evaluation of high-rate characteristic

The full cells according to Examples 1 to 5 and Comparative Examples 1 to 5 were tested by formation charging and discharging under the following conditions.

### 1) Formation process

Charge: constant current-constant voltage (CC-CV) 0.1 C, 4.2 V, 0.001 C cut-off
Rest: 10 minutes
Discharge: CC 0.1 C, 2.5V cut-off
Rest: 10 minutes

The cells which were subjected to the formation charge and discharge, were charged and discharged once at each C-rate while the rate was changed as below.
0.2 C: constant current-constant voltage (CC-CV), 0.2 C, 4.2 V, 0.01 C cut-off/ 0.2 C, 2.5 V cut-off
1.0 C: constant current (CC), 1.0 C, 4.2 V cut-off/ 0.2 C, 2.5 V cut-off

A ratio of charge capacity at 1.0 C relative to charge capacity at 0.2 C was calculated. The results are shown in Table 1.

### Experimental Example 2) Evaluation of cycle-life characteristic

The full cells according to Examples 1 to 5, and Comparative Examples 1 to 5 were charged and discharged for 50 cycles under the condition of 0.33 C constant current-constant voltage (CC-CV) 4.2 V, 0.01 C cut-off charge, 1.0 C constant current (CC) 2.5 V cut-off discharge. A ratio of charge capacity at 1st cycle relative to charge capacity at 50^{th} cycle was calculated. The results are shown in Table 1, as capacity retention (%).

**Table 1**

| | Applied Pressure condition (MPa) | Surface roughness (µm) | High-rate characteristic (%) 1.0 C/0.2 C | Capacity retention (%) |
|---|---|---|---|---|
| Example 1 | 0.3 | 3.2 | 88.0 | 84.2 |
| Example 2 | 0.7 | 4.3 | 89.6 | 88.6 |
| Example 3 | 0.5 | 3.7 | 89.0 | 86.9 |
| Comparative Example 1 | 0.3 (2 times) | 0.7 | 81.6 | 79.6 |
| Comparative Example 2 | 0.3 | 3.6 | 83.0 | 78.2 |

As shown in Table 1, the cells of Examples 1 to 3 including the negative electrode including binder layer and having a surface roughness of 2 µm to 8 µm exhibits desired, improved or advantageous high-rate characteristic and capacity retention compared to the cells of Comparative Examples 1 and 2.

Whereas, Comparative Example 1 having a substantially low surface roughness of 0.7 µm, exhibited substantially low high-rate characteristic and degraded capacity retention. Comparative Example 2 without the binder layer exhibited low high-rate characteristic and substantially low deteriorated capacity retention

While this disclosure has been described in connection with what is presently considered to be practical example embodiments, it is to be understood that the examples of this disclosure are not limited to the disclosed example embodiments, but, on the contrary, are intended to cover various modifications and equivalent arrangements included within the spirit and scope of the appended claims.

## Claims

1. A negative electrode (1) for a rechargeable lithium battery (100), the negative electrode (1) comprising:
a current collector (3);
a negative active material layer (7); and
a binder layer (5) between the current collector (3) and the negative active material layer (7),
wherein the negative active material layer (7) has a surface roughness of about 2 µm to about 8 µm.

2. The negative electrode (1) for the rechargeable lithium battery (100) as claimed in claim 1, wherein the surface roughness of the negative active material layer (7) is about 2.5 µm to about 7 µm.

3. The negative electrode (1) for the rechargeable lithium battery (100) as claimed in claim 1 or 2, wherein the binder layer (5) comprises a first binder, wherein preferably the first binder comprises an aqueous binder, a non-aqueous binder, or a combination thereof.

4. The negative electrode (1) for the rechargeable lithium battery (100) as claimed in any of claims 1 to 3, wherein the negative active material layer (7) comprises a negative active material and a second binder, wherein preferably an amount of the second binder is about 0.1 wt% to about 0.5 wt% based on the total 100 wt% of the negative active material layer (7).

5. The negative electrode (1) for the rechargeable lithium battery (100) as claimed in any one of claims 1 to 4, wherein the negative active material comprises at least one of a material that reversibly intercalates/deintercalates lithium ions, a lithium metal, a lithium metal alloy, a material capable of doping/dedoping lithium, and a transition metal oxide.

6. The negative electrode (1) for the rechargeable lithium battery (100) as claimed in claim 5, wherein the material that reversibly intercalates/deintercalates lithium ions comprises a carbon-based negative active material.

7. The negative electrode (1) for the rechargeable lithium battery (100) as claimed in claim 5, wherein the material capable of doping/dedoping lithium comprises a Si-included negative active material or a Sn-included negative active material.

8. The negative electrode (1) for the rechargeable lithium battery (100) as claimed in any one of claims 1 to 7, wherein the binder layer (5) has a thickness of about 0.2 µm to about 1.7 µm.

9. The negative electrode (1) for the rechargeable lithium battery (100) as claimed in any one of claims 1 to 8, wherein the negative active material layer (7) has a thickness of about 60 µm to about 150 µm.

10. The negative electrode (1) for the rechargeable lithium battery (100) as claimed in any of claims 1 to 9, wherein a ratio of a thickness of the binder layer (5) to a thickness of the negative active material layer (7) is about 750:1 to about 47:1.

11. A method of preparing a negative electrode (1) for a rechargeable lithium battery (100) according to any one of claims 1 to 10, the method comprising:
preparing a negative active material layer (7) by coating a negative active material layer (7) composition on a release substrate (9);
preparing a binder layer (5) by coating a binder liquid on the negative active material layer (7);
positioning a current collector (3) on the binder layer (5) and applying a pressure on the current collector (3); and
removing the release substrate (9).

12. The method of preparing the negative electrode (1) for the rechargeable lithium battery (100) as claimed in claim 11, wherein the binder liquid comprises a binder and a solvent.

13. The method of preparing the negative electrode (1) for the rechargeable lithium battery (100) as claimed in claim 11 or 12, wherein the negative active material layer composition comprises a negative active material, a binder, and a solvent.

14. The method of preparing the negative electrode (1) for the rechargeable lithium battery (100) as claimed in any one of claims 11 to 13, wherein the pressure applied on the current collector (3) is in a range of about 0.1 MPa to about 1.5 MPa.

15. A rechargeable lithium battery (100), comprising:
the negative electrode (1, 20) of any one of claims 1 to 10;
a positive electrode (10); and
a non-aqueous electrolyte.
